# EUROPEAN PATENT SPECIFICATION

(11) **EP 3 098 329 B1**
(45) Date of publication and mention of the grant of the patent: **30.12.2020**
(21) Application number: 16165968.5
(22) Date of filing: 07.10.2009
(51) Int. Cl.: C22C 21/00, C22C 21/02, C22C 21/06, C22F 1/04, C22F 1/043, B21B 1/46, B22D 11/00, B22D 11/12, C22C 21/08, C22C 21/10, C22C 21/14, C22C 21/16, C22C 21/18, C22F 1/047, C22F 1/053, C22F 1/057, B22D 11/06

(54) **A METHOD OF MAKING AN ALUMINIUM METAL FOIL PRODUCT**
VERFAHREN ZUR HERSTELLUNG EINES ALUMINIUMMETALLFOLIENPRODUKTS
PROCÉDÉ DE FABRICATION D'UNE FEUILLE MÉTALLIQUE EN ALUMINIUM

(30) Priority: 07.10.2008 US 246937
(43) Date of publication of application: 30.11.2016
(62) Document number(s) of the earlier application(s) in accordance with Art. 76 EPC: 09737288.2 / 2 347 023
(73) Proprietor: Arconic Technologies LLC, Pittsburgh, PA 15212 (US)
(72) Inventor: Tomes, David, San Antonio, TX Texas 78261 (US); Timmons, David W., Helotes, TX Texas 78023 (US); Wyatt-Mair, Gavin F., Lafayette, CA California 94549 (US); Unal, Ali, Export Pennsylvania, PA Pennsylvania 15632 (US); Collins, III, John W., Austin, TX Texas 78735 (US)
(74) Representative: Trinks, Ole

(56) References cited:
- EP-A1- 1 100 975
- WO-A1-00/66799
- WO-A1-96/27031
- WO-A1-99/42628
- US-B1- 6 238 497

## Description

### BACKGROUND OF THE INVENTION

A feedstock is a material that needs to undergo further processing before it becomes a final product. In one embodiment, the end use application for these feedstock covers various products such as packaging needs Le. household foils. In another embodiment, the aluminum foil products made from the feedstock disclosed has improved surface characteristics and mechanical properties such as high burst pressure, high tensile strength, high yield strength and higher percentage elongation at thin gauges.

The document EP 1 100 975 A1 relates to an improved aluminum alloy fin stock having both a high strength and a high thermal conductivity. The fin stock contains 1.2 to 1.8 % Fe, 0.7 to 0.95 % Si, 0.3 to 0.5 % Mn, and the balance Al, and is produced by continuously strip casting the alloy at a cooling rate greater than 10°C/sec, cold rolling the re-roll sheet to an intermediate gauge, annealing the sheet and cold rolling the sheet to final gauge.

The document US 6,238,497 B1 relates to a method of producing an aluminum alloy fin stock material, comprising the steps of continuously strip casting an aluminum fin stock alloy to form an as-cast strip, rolling the as-cast strip to form a sheet article of intermediate gauge, annealing the sheet article of intermediate gauge, and cold rolling the annealed sheet article of intermediate gauge to produce an aluminum fin stock material of final gauge.

### SUMMARY OF THE INVENTION

The present invention relates to a method for producing an aluminum alloy foil product or an aluminum alloy fin product as defined by independent claim 1, wherein further developments of the inventive method are provided in the subclaims, respectively.

In one embodiment, the present disclosure relates to a feedstock product. In another embodiment of the present disclosure, the product comprises a 1xxx, 3xxx and 8xxx series aluminum alloy made by a non-ingot casting process where the aluminum alloy has a thickness of about 5 micrometers to about 150 micrometers for a foil product. The product has an O-temper tensile strength that is at least 10 % greater compared to the average values of the same alloy in O-temper cast using a slab or roll-casting process. The product has an O-temper elongation that is at least 10 % greater compared to the average values of the same alloy in O-temper cast using a slab or roll-casting process. The product has an O-temper Mullen pressure that is at least 10 % greater compared to the average values of the same alloy in O-temper cast using a slab or roll-casting process. The product is substantially free of pinholes caused by centerline segregation of intermetallic particles.

In one embodiment of the present disclosure, the product comprises an 8111 aluminum alloy made by a non-ingot casting process where the aluminum alloy has a thickness of about 5 micrometers to about 150 micrometers for a foil product. The product has a tensile strength in O-temper that is at least 10 % greater than the average values of standard 8111 alloy in O-temper. The product has an elongation in O-temper that is at least 10 % greater than the average values of standard 8111 alloy in O-temper. The product has a Mullen pressure in O-temper that is at least 10 % greater than the average values of standard 8111 alloy in O-temper. The product is substantially free of pinholes caused by centerline segregation of intermetallic particles.

In another embodiment of the present disclosure, the product comprises an 8921 aluminum alloy made by a non-ingot casting process where the aluminum alloy has a thickness of about 5 micrometers to about 150 micrometers for a foil product. The product has a tensile strength in O-temper that is at least 10 % greater than the average values of standard 8921 alloy in O-temper. The product has an elongation in O-temper that is at least 10 % greater than the average values of standard 8921 alloy in O-temper. The product has a Mullen pressure in O-temper that is at least 10 % greater than the average values of standard 8921 alloy in O-temper. The product is substantially free of pinholes caused by centerline segregation of intermetallic particles.

These and other further embodiments of the invention will become more apparent through the following description and drawings.

### BRIEF DESCRIPTION OF THE DRAWINGS

For a fuller understanding of the invention, reference is made to the following description and the accompanying drawing(s), in which:
FIG. 1 is a flow chart showing the existing method of making foil and fin from roll cast feedstock;
FIG. 2 is a flow chart showing one embodiment of the method of making foil in accordance with the present invention;
FIG. 3 is three layered casting strip of one embodiment of the present disclosure; and
FIG. 4 is a photomicrograph at 100 times magnification of the transverse section of the as cast strip alloy 8921 of one embodiment of the present disclosure.

### DETAILED DESCRIPTION OF THE PREFERRED EMBODIMENTS

The following are the definitions of the terms used in this application. As used herein, the term "feedstock" means that the material that needs to undergo further processing before it becomes a final product such as a household foil.

As used herein, the term "aluminum alloy" means an aluminum metal with other elements. Elements may include copper, iron, magnesium, nickel, silicon, zinc, chromium, manganese, titanium, vanadium, zirconium, tin, and/or scandium. Elements are added to influence physical properties of the aluminum alloy and performance characteristics.

As used herein, the term "centerline segregation" means aligned intermetallic particles in the center plane of strip made by conventional roll casters. It can lead to tearing of the sheet during rolling and results in poor mechanical properties in the final product.

As used herein, the term "refined microstructures" means microstructures with fine grain size and fine constituents.

As used herein, the term "beta intermetallic phase particles" means rod like particles of AlgFeSi composition. These are brittle particles that break up during rolling and result in inferior mechanical properties in the final product. Their detrimental effects are eliminated by homogenization treatments that convert the beta phase to the more ductile alpha phase.

As used herein, the term "in-line" means without intermediate coiling and uncoiling.

As used herein, the term "grain refiner" means a chemical compound such as TiB₂, TiC or AITi that helps create a finer grain structure in the cast metal.

As used herein, the term "Mullen burst pressure" means pressure at which a sheet tears. It measures resistance to tearing.

As used herein, the term "substantially" means to a great extent or degree.

As used herein, the term "non-ingot casting process" means any casting process that does not produce an ingot.

As used herein, the term "slab process" means a process that casts a slab between about 0.635 cm (0.25 inches) and about 20.32 cm (8 inches) in thickness.

As used herein, the term "roll-casting process" means casting a strip of thickness of about 0.635 cm (0.25 inches) to about 1.27 cm (0.5 inches) at speeds of less than 304.8 cm (10 feet) per minute using convention roll casters at high roll separating forces.

As used herein, the term "pinholes" means a small hole in a metal sheet or foil as measured in a light box.

As used herein, the term "hot rolling" means rolling of aluminum metal at an entry temperature above about 371°C (700°F).

As used herein, the term "warm rolling" means rolling of aluminum metal at an entry temperature range of about 177°C (350°F) to about 371°C (700°F).

As used herein, the term "cold rolling" means rolling of aluminum metal at a entry temperature below about 177°C (350°F).

In one embodiment, the present disclosure relates to a feedstock produced using a method that includes producing a casting strip of a thickness of less than about 6 mm from an aluminum alloy, hot rolling the casting strip in-line to a thickness of no greater than about 1 mm, and coiling the resultant strip to produce the feedstock product for a metal foil, where the cast strip is substantially free of beta intermetallic phase particles.

In another embodiment, the feedstock is further processed to provide a metal foil with improved mechanical properties and surface characteristics.

In another embodiment, the feedstock product is then further processed by uncoiling the strip, cold rolling the feedstock strip to a required product thickness, and partially or fully annealing the final-gauge strip to produce a metal foil.

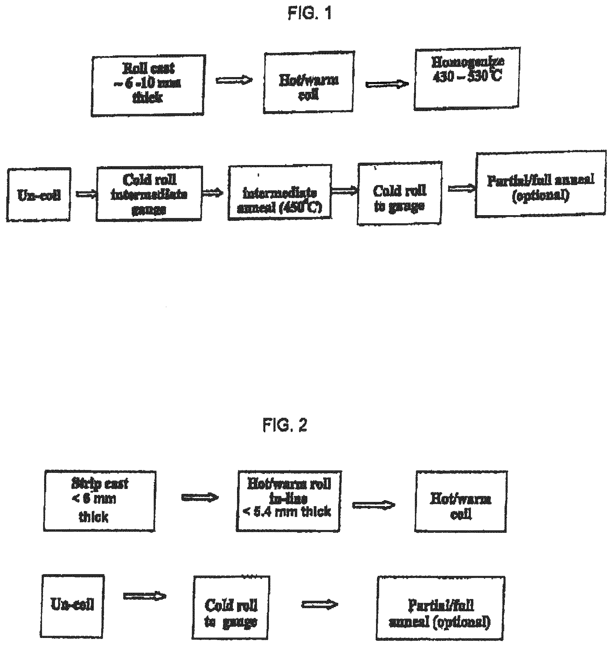

FIG. 1 shows a flow chart outlining the principal steps for the conventional process of making foil and fin products from roll cast feedstock. In the initial step 10, the aluminum alloy is roll cast to a thickness between about 6 mm and about 10 mm. The aluminum alloy casting strip is then hot/warm coiled in-line 20 and then optionally separately homogenized at around 430°C to about 530°C. In the next step 40, the homogenized coil is then un-coiled so that the aluminum alloy casting strip may be cold rolled to an intermediate gauge in step 50. The intermediate gauge strip is then intermediately annealed at 450°C in step 60 and cold rolled to the final gauge of the foil. In the final step 80, the aluminum alloy casting strip is optionally either partially or fully annealed depending on the physical properties needed for the product.

In one embodiment, FIG. 2 shows a flow chart outlining the principal steps of the present invention. The present invention eliminates the lengthy and expensive homogenization and/or intermediate anneal steps normally associated with the current methods of roll cast or ingot feedstock and eliminates one or more cold rolling passes. Here, the feedstock strip cast of thickness of less than about 6 mm material is produced at high speeds in the first step 100. The aluminum alloy material is then hot rolled in-line in the second step 200 to a thickness of at most about 1 mm at about 382°C (720°F). The feedstock material is then hot/warm coiled in-line in the third step 300. This material is an embodiment of the feedstock of the present invention, provided for further off-line processing into a finished product. In such an off-line operation, the coil is then un-coiled in step 400 prior to being cold rolled in the fifth step 500 to finish gauge, which is the required product thickness. The finished gauge product may optionally be subjected to a partial or full anneal treatment in the sixth step 600 depending on the application, or supplied in as-rolled condition.

In the initial step, a strip of less than about 6 mm in thickness is cast. In one embodiment, a method of making the casting strip of a thickness of less than about 6 mm from an aluminum alloy is done by continuously casting the aluminum alloy. This includes delivering molten aluminum alloy juxtaposed and in communication with a pair of water-cooled rolls arranged in a generally horizontal plane. This casting is done at high speeds, such as about 62 m/min (200 fpm). Molten aluminum alloy from a reservoir is advanced towards a nip between the rolls. Outer layers of solid aluminum alloy forms on each of the rolls, and a semi-solid aluminum layer is produced in the center between the solid layers. The semi-solid layer includes a molten component and a solid component of broken dendritic arms detached from the solidification front. The solid outer layers and the solid component of the semi-solid aluminum alloy pass through the nip such that a strip of solid aluminum alloy exits the nip. The strip exiting the nip includes a solid central layer sandwiched between the outer conforming layers of aluminum alloy.

In another embodiment (not part of the claimed invention), a method of making the casting strip of a thickness of less than about 6 mm from an aluminum alloy is by in one, continuous in-line sequence that includes the following steps: (a) a hot aluminum feedstock is hot rolled to reduce its thickness; (b) the hot reduced feedstock is thereafter annealed in-line without substantial intermediate cooling; (c) the annealed feedstock is thereafter immediately and rapidly quenched to a temperature suitable for cold rolling; and (d) the quenched feedstock is subjected to cold rolling to produce sheet having desired thickness and metallurgical properties.

The resulting casting strip produced has a refined microstructure and surprisingly, is substantially free of beta intermetallic phase particles. This results in superior quality foil products.

Types of aluminum alloys that may be used in the present invention include, but are not limited to, 1XXX, 3XXX, and 8XXX aluminum alloys (Aluminum Association designations). Note that 8921 and 8111 household foils are described in examples later.

In one embodiment, the thickness of the casting strip is less than about 6 mm. In another embodiment, the thickness of the casting strip is from about 1 mm to about 5 mm. In a further embodiment, the thickness of the casting strip is from about 2 mm to about 4 mm.

In the second step, the strip cast is then hot rolled in-line to a desired thickness with a minimum of 10% reduction in thickness at about 382°C (720°F) in one embodiment of the present invention. The term "hot rolled in-line" is defined as any rolling of aluminum cast strip directly from the caster at a mill inlet temperature of above about 371°C (700°F). In one embodiment, the temperature of the feedstock material after hot rolling is below about 371°C (700°F) at the coiler.

A combination of hot- and warm rolling steps in-line can be used to reduce the material to the desired thickness. This is limited only by the number of mill stands in-line with the caster.

In the third step, the feedstock material is hot/warm coiled. In one embodiment, the temperature of the feedstock material is below about 371°C (700°F) at the coilers.

In the fourth step, the coil is un-coiled so that the aluminum alloy casting strip may be cold rolled to the required product thickness for the fifth step. In one embodiment, cold rolling takes place between a pair of rotating rolls at room temperature. In another embodiment, the cold rolling step may be broken down to various steps depending on the product thickness. For example, the feedstock material may be rolled to a breakdown gauge before rolling the feedstock material to the final gauge needed.

Depending on the final gauge desired, this results in a foil product having a substantially uniform thickness between about 5 to about 150 micrometers. Table 1 shows a comparison of properties of the household foil made from the present invention of 8921 aluminum alloy with a typical commercial household aluminum foil.

**Table 1**

| product | anneal | thickness | tensile strength | yield strength | elongation (min.) | Mullen |
|---|---|---|---|---|---|---|
| | F/hr | inch | ksi | ksi | % | psi |
| Micromill 8921 | 550 F/4 hr | 0.000568 | 20.8 | 17.0 | 5.9 | 21.3 |
| Micromill 8921 | 600 F/4 hr | 0.000628 | 20.6 | 15.4 | 6.8 | 23.8 |
| Micromill 8921 | 650 F/4 hr | 0.000606 | 19.7 | 14.9 | 6.2 | 22.6 |
| ReynoldsWrap | | 0.000634 | 12.3 | 6.6 | 5.1 | 13.7 |

| | C/ hr | µm | MPa | MPa | % | kPa |
|---|---|---|---|---|---|---|
| Micromill 8921 | 288 C/4 hr | 14.4 | 143.4 | 117.2 | 5.9 | 146.8 |
| Micromill 8921 | 316 C/4 hr | 16.0 | 142.0 | 106.2 | 6.8 | 164.1 |
| Micromill 8921 | 343 C/4 hr | 15.4 | 135.8 | 102.7 | 6.2 | 155.8 |
| ReynoldsWrap | | 16.1 | 84.8 | 45.5 | 5.1 | 94.4 |

| | | | | | | |
|---|---|---|---|---|---|---|
| Notes: 1. ReynoldsWrap values are averages for the standard product sold under this brand name. 2. Yield strength is not specified for household foil. | | | | | | |

Table 2 shows a comparison of properties of the household foil made from the present invention of 8111 aluminum alloy with a typical commercial household aluminum foil.

**Table 2**

| product | anneal | thickness | tensile strength | yield strength | elongation (min.) | Mullen |
|---|---|---|---|---|---|---|
| | F/hr | inch | ksi | ksi | % | psi |
| Micromill 8111 | 525 F/ 4 hr | 0.000572 | 20.6 | 17.4 | 3.1 | 12.9 |
| Micromill 8111 | 600 F/4 hr | 0.000599 | 15.1 | 8.0 | 5.3 | 12.0 |
| Micromill 8111 | 650 F/4 hr | 0.000610 | 14.0 | 6.8 | 5.8 | 16.0 |
| ReynoldsWrap | (mean values) | 0.000634 | 12.3 | 6.6 | 5.1 | 13.7 |
| | Specifications | 0.00064 +/-10% | 11.2 - 12.7 | | 4.2 | 11.5 |

| | C/ hr | µm | MPa | MPa | % | kPa |
|---|---|---|---|---|---|---|
| Micromill 8111 | 274 C/4 hr | 14.5 | 142.0 | 120.0 | 3.1 | 88.9 |
| Micromill 8111 | 316 C/4 hr | 15.2 | 104.1 | 55.2 | 5.3 | 82.7 |
| Micromill 8111 | 343 C/4 hr | 15.5 | 96.5 | 46.9 | 5.8 | 110.3 |
| ReynoldsWrap | (mean values) | 16.1 | 84.8 | 45.5 | 5.1 | 94.4 |
| | Specifications | 16.3 +/-10% | 77.2-87.6 | | 4.2 | 79.3 |

| | | | | | | |
|---|---|---|---|---|---|---|
| Notes: 1. Reynolds Wrap values are averages for the standard product sold under this brand name. 2. Yield strength is not specified for household foil. | | | | | | |

In the sixth step, the finished gauge product may optionally be subjected to a partial or full anneal treatment depending on the application or supplied in as-rolled condition.

The casting strip is substantially free of beta intermetallic phase particles which results in a foil that is also free of beta intermetallic phase particles. Determination of the presence of beta intermetallic phase particles is conducted by microscope.

In one embodiment, the present invention provides a method of making feedstock for aluminum foil without the use of a grain refiner, intermediate anneals or homogenization. This results in improved properties of the resultant aluminum foils for the same alloy. For example, some of the improved alloy properties include a higher strength, ductility and burst pressure. Note that this method of making feedstock for metal foil may be used to manufacture fin products.

In another embodiment, the present method produces a feedstock product with improved properties.

In one embodiment, the product comprises a 1xxx, 3xxx and 8xxx series aluminum alloy made by a non-ingot casting process where the aluminum alloy has a thickness of about 5 micrometers to about 150 micrometers for a foil product. The product has an O-temper tensile strength, an O-temper elongation, and an O-temper Mullen pressure that are at least 10 % greater compared to the average values of the same alloy in O-temper cast using a slab or commercially available roll-casting process. The product is also substantially free of pinholes caused by centerline segregation of intermetallic particles.

In another embodiment, the product comprises a 8111 aluminum alloy made by a non-ingot casting process where the aluminum alloy has a thickness of about 5 micrometers to about 150 micrometers for a foil product. The product has a tensile strength in O-temper, an elongation in O-temper, and a Mullen pressure in O-temper that are at least 10 % greater than the average values of standard 8111 alloy in O-temper. The product is substantially free of pinholes caused by centerline segregation of intermetallic particles. The product demonstrates the same foldability as Reynolds Wrap®.

In another embodiment, the product comprises an 8921 aluminum alloy made by a non-ingot casting process where the aluminum alloy has a thickness of about 5 micrometers to about 150 micrometers for a foil product. The product has a tensile strength in O-temper, an elongation in O-temper, and a Mullen pressure in O-temper that are at least 10 % greater than the average values of standard 8921 alloy in O-temper. The product is substantially free of pinholes caused by centerline segregation of intermetallic particles in the feedstock material.

Examples of the improved properties of the feedstock products for the 8921 aluminum alloy may be found in Table 1. Examples of the improved properties of the feedstock products for the 8111 aluminum alloy may be found in Table 2.

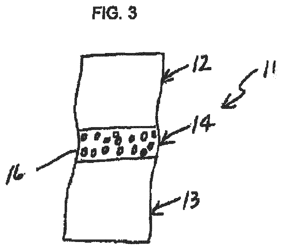

FIG. 3 shows a three layered casting strip 11 produced by the present method.

Casting strip 11 includes an upper and lower shell 12 and 13 and a central layer 14 which sandwiched between the upper and lower shell 12 and 13, respectively. The center layer is substantially free of harmful intermetallic particle stringers.

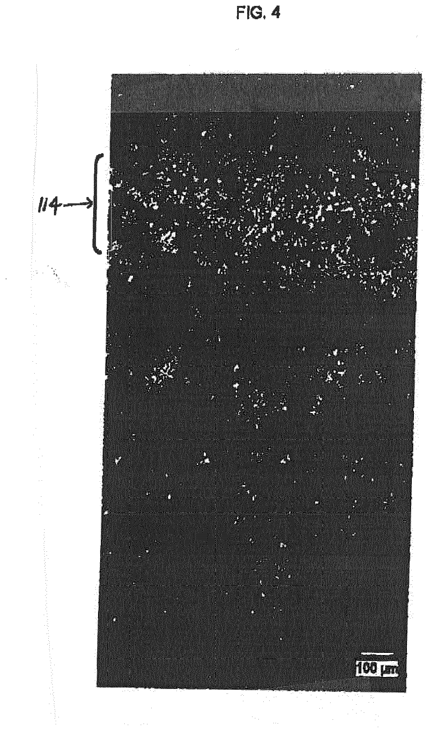

FIG. 4 shows a photomicrograph at 100 times magnification of a transverse section of an as-cast strip of alloy 8921 produced according to the present invention. This photomicrograph shows refined microstructures, fine grains and no centerline segregation.

In one embodiment, the non-ingot casting process is the method of making a feedstock for metal foil described above.

### Example 1

A sample of alloy 8921 was initially strip cast to a thickness of 2.7 mm and then was hot and warm rolled in line to about 0.64 mm in two mill stands. The metal was coiled at 163°C (325°F). Alloy 8921 was then un-coiled and subsequently cold rolled to foil gauge, a thickness of 16 µm in multiple rolling passes.

### Example 2

A sample of alloy 8111 was strip cast to a thickness of 2.5 mm and then was hot and warm rolled in line to about 0.64 mm in two mill stands. Alloy 8111 was then coiled at 163°C (325°F). Alloy 8111 was then un-coiled and subsequently cold rolled to foil gauge of 16 µm in multiple rolling passes.

The final anneal for Example 1 was done at 274, 316 and 343°C (525, 600 and 650°F) with a hold time of 4 hours. The final anneal for Example 2 was done at 288, 316 and 343°C (550, 600 and 650°F) with a hold time of 4 hours. Mechanical property evaluations were carried out by standard ASTM procedures E345-93. Mullen tests were done according to ASTM #774-97. Pinhole determination was done by ASTM B926-03.

While specific embodiments of the invention have been described in detail, it will be appreciated by those skilled in the art that various modifications and alternatives to those details could be developed in light of the overall teachings of the disclosure.

## Claims

1. A method for producing an aluminum alloy foil product or an aluminum alloy fin product, comprising the following steps:
- in-line processing a feedstock material, wherein the in-line processing is completed without intermediate coiling and uncoiling; and
- off-line processing of the feedstock material such as to produce the aluminum alloy foil product or the aluminum alloy fin product,
wherein the step of in-line processing the feedstock material comprises the following steps:
a) providing a casting strip of a thickness of less than 6 mm from an aluminum alloy;
b) in-line hot rolling the casting strip at a temperature of above 371.11° C (= 700° F) to a thickness of no greater than 1 mm; and
c) in-line hot/warm coiling the hot-rolled casting strip to produce the feedstock material, and
wherein the step of off-line processing consists of the following steps:
d) un-coiling the coiled feedstock material;
e) cold rolling the un-coiled material at a temperature of below 176.7° C (= 350° F) to a finish gauge, the finish gauge being between 5 µm and 150 µm; and
f) optionally: partially or fully annealing the finished gauge product.

2. The method of claim 1,
wherein, in step a), a casting strip having a thickness between 1 mm and 5 mm, preferably between 2 mm and 4 mm, is provided.

3. The method of claim 1 or 2,
wherein, in step a), a casting strip is provided by a non-ingot process, and
wherein the casting strip is made by continuously casting the aluminum alloy at a speed of 62 meters per minute.

4. The method of claim 3,
wherein, in step a), a casting strip is produced having a central part free of intermetallic particles.

5. The method of one of claims 1 to 4,
wherein step b) is performed at an entry temperature of 382.22 °C.

6. The method of one of claims 1 to 5,
wherein, in step c), coiling is performed at a temperature below 371.11 °C.

7. The method of one of claims 1 to 6,
wherein, in step e), the cold-rolling is performed at room temperature.

8. The method of one of claims 1 to 7,
wherein the step of in-line processing the feedstock material is performed without the use of a grain refiner, intermediate anneals or homogenization.

9. The method of one of claims 1 to 8,
wherein the aluminum alloy is:
- a 8111 aluminum alloy; or
- a 8921 aluminum alloy; or
- a 1xxx, 3xxx and/or 8xxx aluminum alloy.

## Patentansprüche

1. Verfahren zum Herstellen eines Aluminiumlegierungsfolienprodukts oder eines Aluminiumlegierungslamellenprodukts, umfassend die folgenden Schritte:
- Inline-Verarbeiten eines Ausgangsmaterials, wobei das Inline-Verarbeiten ohne Zwischenaufwicklung und -abwicklung durchgeführt wird; und
- Offline-Verarbeiten des Ausgangsmaterials, beispielsweise zur Herstellung des Aluminiumlegierungsfolienprodukts oder des Aluminiumlegierungslamellenrodukts,
wobei der Schritt des Inline-Verarbeitens des Ausgangsmaterials die folgenden Schritte umfasst:
a) Bereitstellen eines Gussbandes mit einer Dicke von weniger als 6 mm von einer Aluminiumlegierung;
b) Inline-Heißwalzen des Gussbandes bei einer Temperatur über 371,11 °C (= 700 °F) auf eine Dicke von nicht mehr als 1 mm; und
c) Inline-Heiß/Warm-Aufwickeln des warmgewalzten Gussbandes zur Herstellung des Ausgangsmaterials, und
wobei der Schritt des Offline-Verarbeitens aus den folgenden Schritten besteht:
d) Abwickeln des aufgewickelten Ausgangsmaterials;
e) Kaltwalzen des abgewickelten Materials bei einer Temperatur unter 176,7 °C (= 350 °F) auf eine Enddicke, wobei die Enddicke zwischen 5 µm und 150 µm liegt; und
f) optional: teilweises oder vollständiges Glühen des Enddickenprodukts.

2. Verfahren nach Anspruch 1,
wobei in Schritt a) ein Gussband mit einer Dicke zwischen 1 mm und 5 mm, bevorzugt zwischen 2 mm und 4 mm, bereitgestellt wird.

3. Verfahren nach Anspruch 1 oder 2,
wobei in Schritt a) ein Gussband durch einen Prozess ohne Barren bereitgestellt wird, und wobei das Gussband durch Stranggießen der Aluminiumlegierung bei einer Geschwindigkeit von 62 Metern pro Minute hergestellt wird.

4. Verfahren nach Anspruch 3,
wobei in Schritt a) ein Gussband mit einem Mittelteil ohne intermetallische Partikel hergestellt wird.

5. Verfahren nach einem der Ansprüche 1 bis 4,
wobei Schritt b) bei einer Eintrittstemperatur von 382,22 °C durchgeführt wird.

6. Verfahren nach einem der Ansprüche 1 bis 5,
wobei in Schritt c) das Aufwickeln bei einer Temperatur unter 371,11 °C durchgeführt wird.

7. Verfahren nach einem der Ansprüche 1 bis 6,
wobei in Schritt e) das Kaltwalzen bei Raumtemperatur durchgeführt wird.

8. Verfahren nach einem der Ansprüche 1 bis 7,
wobei der Schritt des Inline-Verarbeitens des Ausgangsmaterials ohne Verwendung von Kornverfeinerungsmittel, Zwischenglühvorgängen oder Homogenisierung durchgeführt wird.

9. Verfahren nach einem der Ansprüche 1 bis 8,
wobei die Aluminiumlegierung ist:
- eine 8111-Aluminiumlegierung; oder
- eine 8921-Aluminiumlegierung; oder
- eine lxxx-, 3xxx- und/oder 8xxx-Aluminiumlegierung.

## Revendications

1. Procédé pour la production d'un produit de feuille d'alliage d'aluminium ou d'un produit d'ailette d'alliage d'aluminium, comprenant les étapes suivantes :
- le traitement en ligne d'une matière première, dans lequel le traitement en ligne est terminé sans enroulement et déroulement intermédiaires ; et
- le traitement hors ligne de la matière première de sorte à produire le produit de feuille d'alliage d'aluminium ou le produit d'aileron d'alliage d'aluminium,
dans lequel l'étape de traitement en ligne de la matière première, comprend les étapes suivantes :
a) la fourniture d'une bande de coulée d'une épaisseur inférieure à 6 mm à partir d'un alliage d'aluminium ;
b) le laminage à chaud en ligne de la bande de coulée à une température supérieure à 371,11 °C (= 700 °F) à une épaisseur non supérieure à 1 mm ; et
c) l'enroulement à chaud/ tiède en ligne de la bande de coulée laminée à chaud pour produire la matière première, et
dans lequel l'étape de traitement hors ligne est constituée des étapes suivantes :
d) le déroulement de la matière première enroulée ;
e) le laminage à froid de la matière déroulée à une température inférieure à 176,7 °C (= 350 °F) à un calibre fini, le calibre fini étant comprise entre 5 µm et 150 µm ; et
f) en option : le recuit partiel ou complet du produit de calibre fini.

2. Procédé selon la revendication 1,
dans lequel, dans l'étape a), une bande de coulée ayant une épaisseur comprise entre 1 mm et 5 mm, de préférence entre 2 mm et 4 mm, est fournie.

3. Procédé selon la revendication 1 ou 2,
dans lequel, dans l'étape a), une bande de coulée est fournie par un procédé de non-lingot, et dans lequel la bande de coulée est faite par la coulée continue de l'alliage d'aluminium à une vitesse de 62 mètres par minute.

4. Procédé selon la revendication 3,
dans lequel, dans l'étape a), une bande de coulée est produite ayant une partie centrale exempte de particules intermétalliques.

5. Procédé selon l'une quelconque des revendications 1 à 4,
dans lequel l'étape b) est effectuée à une température d'entrée de 382,22 °C.

6. Procédé selon l'une quelconque des revendications 1 à 5,
dans lequel, dans l'étape c), l'enroulement est effectué à une température inférieure à 371,11 °C.

7. Procédé selon l'une quelconque des revendications 1 à 6,
dans lequel, dans l'étape e), le laminage à froid est effectué à température ambiante.

8. Procédé selon l'une quelconque des revendications 1 à 7,
dans lequel l'étape de traitement en ligne de la matière première est effectuée sans l'utilisation d'un raffineur de grains, de recuits intermédiaires ou d'homogénéisation.

9. Procédé selon l'une quelconque des revendications 1 à 8,
dans lequel l'alliage d'aluminium est :
- un alliage d'aluminium 8111 ; ou
- un alliage d'aluminium 8921 ; ou
- un alliage d'aluminium 1xxx, 3xxx et/ ou 8xxx.
